# EUROPÄISCHE PATENTSCHRIFT

(11) **EP 2 276 554 B1**
(45) Veröffentlichungstag und Bekanntmachung des Hinweises auf die Patenterteilung: **22.02.2012**
(21) Anmeldenummer: 09745733.7
(22) Anmeldetag: 12.05.2009
(51) Int. Cl.: B01D 53/68, B01D 53/86, B01D 53/78

(54) **VERFAHREN ZUR ABSORPTION VON CHLOR AUS GASSTRÖMEN**
METHOD FOR ABSORBING CHLORINE FROM GAS STREAMS
PROCÉDÉ POUR L'ABSORPTION DU CHLORE PRÉSENT DANS DES FLUX GAZEUX

(30) Priorität: 15.05.2008 DE 102008001795
(43) Veröffentlichungstag der Anmeldung: 26.01.2011
(73) Patentinhaber: Wacker Chemie AG, 81737 München (DE)
(72) Erfinder: HANKE, Wolfgang, 04703 Leisnig / OT Tragnitz (DE); SALAMON, Marcel, 01558 Großenhain (DE)
(74) Vertreter: Fritz, Helmut
(86) Internationale Anmeldenummer: PCT/EP2009/055715
(87) Internationale Veröffentlichungsnummer: WO 2009/138401

(56) Entgegenhaltungen:
- WO-A-97/03749
- WO-A-2007/134717
- DE-A1- 1 963 946
- US-A- 5 160 707
- HOLLEMAN, WIBERG: "Lehrbuch der Anorganischen Chemie" 2007, WALTER DE GRUYTER 102 , XP002543098 Seite 467, markierte Passagen

## Beschreibung

Die Erfindung betrifft ein Verfahren zur Absorption von Chlor aus Gasströmen in Wasser mit geregelter Zugabe von Wasserstoffperoxid.

Bei industriellen Prozessen, in denen Chlorverbindungen mit hohen Temperaturen behandelt werden (z.B. Verbrennung chlororganischer Verbindungen, Chlorierungsreaktionen und Hydrolysereaktionen) entsteht Chlorwasserstoff, der mit eventuell vorhandenem Sauerstoff nach dem Deacon-Gleichgewicht elementares Chlor bildet. Dieses ist im Abgasstrom vorhanden und muss aus diesem zur Einhaltung der Emissionsgrenzwerte entfernt werden.

Da die Löslichkeit von Chlor in Wasser gering ist, erfolgt die Absorption von Chlor im allgemeinen mit basischen Absorptionsmitteln, wie nachfolgend mit Natronlauge über Gleichungen (1) und (2) beschrieben:

Cl₂ + H₂O -----> HCl + HClO (1)

HCl + HClO + 2 NaOH -----> NaCl + NaClO + H₂O (2)

Aber auch andere basische Absorptionsmittel (Kalkmilch, Ammoniak, Amine, Carbonate, Hydrogenkarbonate usw.) sind möglich.

Bei allen basischen Absorptionsverfahren wirkt als Triebkraft die Bildung von Salzen (Chlorid und Hypochlorit).

Als Ergebnis dieser Verfahren entstehen hypochlorithaltige Salzlösungen, die begrenzte Anwendungen finden (z.B. Chlorbleichlauge) oder nach entsprechender Behandlung in das Abwasser gegeben werden. Für diesen Zweck müssen die gebildeten Hypochlorite reduziert werden, was üblicherweise durch Zusatz von Sulfiten, Thiosulfaten, Wasserstoffperoxid u.a erfolgt. So wird in EP0406675 eine Absorptionslösung bestehend aus Natriumhydrogencarbonat und Natriumhydrogensulfit eingesetzt.

Auch die Absorption in sauren Medien ist beschrieben. Dabei kommen meist Metallsalze in niedrigen Oxidationsstufen (z.B. Fe2+, Cul+ usw.) als Absorptionsmittel zum Einsatz, die dann durch Chlor in höhere Oxidationsstufen überführt werden (siehe z.B. DE-OS 2545342).

Bei allen vorstehend beschriebenen Verfahren entstehen Salzlösungen, die nur begrenzt weiterverwendet werden können.

Weiterhin ist die Abscheidung von Chlor mit organischen Lösungsmitteln beschrieben. So kommen Verbindungen wie Tetrachlormethan, Dichlortoluen, Dichlorbenzotrofluorid usw. zum Einsatz. Diese Stoffe haben den Nachteil, dass sie einen merklichen Dampfdruck besitzen und ihrerseits aus den gereinigten Gasströmen entfernt werden müssen.

In SU 697160 wird eine Methode zur Reinigung von Abgasen beschrieben, die Borchlorid, Titanchlorid sowie Chlor, Chlorwasserstoff und Phosgen enthalten. Diese Methode benötigt in einer Stufe konzentrierte Salzsäure und in einer weiteren Stufe salzsaure Wasserstoffperoxidlösung als Absorptionsmittel. Diese Methode ist weiterhin dadurch gekennzeichnet, dass diese abfallfrei und damit abwasserfrei arbeitet. Beschrieben wird ein Batchprozeß, bei welchem zunächst eine konzentrierte, 35%ige Salzsäure und eine 9- 30%ige Wasserstoffperoxidlösung vorgelegt werden und anschließend das Abgas durchgeleitet wird.

WO 97/03749 beschreibt ein Verfahren zur Verbrennung von halogenierten Kohlenwasserstoffgasen, wobei Chlorgas entsteht. Die Umsetzung des Chlorgases erfolgt mit Wasserstoffperoxid und Calciumhydroxid, wobei Calciumchlorid entsteht.

WO 2007/134717 beschreibt ein Verfahren zur Absorption von Chlor aus Abgas in eine basische wässrige Lösung in Gegenwart von Wasserstoffperoxid.

US 5160707 A beschreibt die Entfernung von schlechtriechenden organischen Verbindungen aus der Abluft von Klärschlamm. Chlorgas wird mit Wasserstoffperoxid beseitigt.

Es bestand die Aufgabe, ein einfaches,kontinuierlich arbeitendes Verfahren zur Absorption von Chlor aus Gasströmen bereitzustellen, welches verwertbare Produkte liefert.

Gegenstand der Erfindung ist ein Verfahren zur Absorption von Chlor in Form von Cl₂ aus Gasströmen, die ausgewählt werden aus Stickstoff,

Sauerstoff, Kohlendioxid, Argon, Helium und deren Gemischen, in Wasser, bei dem die Bildung von unterchloriger Säure durch die geregelte Zugabe von Wasserstoffperoxid unterdrückt wird, dadurch gekennzeichnet, daß Salzsäure gebildet wird.

Es wurde gefunden, dass trotz der geringen Löslichkeit von Chlor in Wasser auch Wasser für die Absorption von chlorhaltigen Gasströmen eingesetzt werden kann, wenn Bedingungen geschaffen werden, die die Bildung der unterchlorigen Säure nach Gleichung 1 unterdrücken. Das erfindungsgemäße Verfahren benötigt keine konzentrierte Salzsäure in einer vorgeschalteten Waschstufe und arbeitet kontinuierlich.

Es wurde festgestellt, dass Chlor in einer durch Einleiten von Chlor in Wasser erzeugten salzsauren Absorptionslösung bei Zugabe von Wasserstoffperoxid zu Salzsäure reagiert und auf diese Weise im Absorptionsmittel gebunden werden kann. Eine auf dieser Basis aufgebaute kontinuierliche Absorptionsanlage erzeugt einen Abwasserstrom, welcher keine Salze und keine bzw. geringe Mengen unterchlorige Säure enthält, jedoch verwertbare Salzsäure. Die Zugabe von Wasserstoffperoxid kann so eingestellt werden, dass die gebildete Salzsäure keine unterchlorige Säure enthält.

Vorzugsweise wird im erfindungsgemäßen Verfahren Wasser vorgelegt und Wasserstoffperoxid geregelt nach den sich aus den Chlorkonzentrationen der Gasphase ergebenden Erfordernissen zugegeben. Die im Prozeß gebildete Salzsäure bildet einen salzfreien Abwasserstrom, welcher nicht nur als Abwasser abgeleitet werden kann, sondern auch eine stoffliche Verwertung in weiteren Prozessen ermöglicht.

Vorzugsweise werden im Verfahren Gasströme eingesetzt, die neben Chlor höchstens 10 Volumenteile, besonders bevorzugt höchstens 3 Volumenteile, insbesondere höchstens 1 Volumenteil, jeweils bezogen auf 100 Volumenteile Chlor an anderen gasförmigen im Wasser absorbierbaren Bestandteile enthalten. Andere im Wasser absorbierbare gasförmige Bestandteile des Gasstromes können beispielsweise Chlorwasserstoff und Fluorwasserstoff sein.

Als Gasstrom kann insbesondere Luft eingesetzt werden.

In einer bevorzugten Ausführungsform durchläuft der Chlor enthaltende Gasstrom nacheinander zwei oder mehr Stufen, wobei vorzugsweise in Gasströmungsrichtung die Wasserstoffperoxidkonzentrationen der wässrigen Phasen zunehmen.

Zur Absorption von Chlor aus Gasströmen können an sich bekannte Vorrichtungen eingesetzt werden, beispielsweise Bodenkolonnen, Füllkörperkolonnen und Wäscher, wie Sprühwäscher oder naßarbeitende Staubabscheider.

Die im Verfahren gebildete Salzsäure weist vorzugsweise eine Konzentration von mindestens 0,5%, höchstens 18% auf. Die im Verfahren gebildete Salzsäure wird vorzugsweise in weiteren Prozessen verwertet.

### Beispiele

Soweit nicht anders angegeben sind alle Mengen und Prozentangaben auf das Gewicht bezogen.

### 1a nicht erfindungsgemäss

Ein chlorhaltiger Inertgasstrom wird in einen Wäscher geleitet, welcher mit einem Natronlauge- Absorptionskreislauf betrieben wird. Abwasser fließt einer Abwasserbehandlung zu, welche den pH- Wert einstellt und mit Hilfe eines Reduktionsmittels die NaOCl- Fracht in NaCl umwandelt und als Abwasser abgegeben. Das gesamte abgeschiedene Chlor wird in Natriumchlorid überführt und in das Abwasser abgegeben. Dieses Chlor wird somit aus dem Stoffverbund entfernt und geht verloren.

### 1b erfindungsgemäss

Es wird ein chlorhaltiger Inertgasstrom in einen (oder mehrere) Wäscher geleitet, der mit einem salzsauren Absorptionskreislauf betrieben wird, welchem Wasser und Wasserstoffperoxid zulaufen oder über Böden zugegeben werden. Die erzeugte Salzsäure wird einer Chlorwasserstoffabsorption zugeführt.

### 2a nicht erfindungsgemäss

Ein chlorhaltiger Inertgasstrom wird in einen Wäscher geleitet, welcher mit einem ph-Wert geregelten Natronlauge-Absorptionskreislauf betrieben wird. Gebildetes Natriumhypochlorit wird durch die Redox-geregelte Zugabe von Wasserstoffperoxid in NaCl umgewandelt. Den Wäscher verläßt ein salzhaltiger Abwasserstrom.

### 2b erfindungsgemäss

Es wird ein chlorhaltiger Inertgasstrom in einen (oder mehrere) Wäscher geleitet, der mit einem salzsauren Absorptionskreislauf betrieben wird, welchem Wasser und Wasserstoffperoxid Redox- und Leitfähigkeitsgeregelt zulaufen und/oder über Böden zugegeben werden. Die erzeugte Salzsäure wird in einem separaten Produktionsprozeß genutzt.

### 3 erfindungsgemäss

In eine mit Wasser gefüllte Füllkörperkolonne wurde bei 37°C und einem Unterdruck von 20mbar ein Gasstrom mit einem Chlorgehalt von 1,7%, einem Chlorwasserstoffgehalt von 0,017%, einem Kohlendioxidgehalt von 3,6% und einem Stickstoffgehalt von 71,2% eingeleitet. Durch die geregelte Zugabe von Wasserstoffperoxid wurde ein Abwasserstrom mit einer Salzsäurekonzentration von 2% hergestellt, welcher keine unterchlorige Säure enthielt.

## Patentansprüche

1. Verfahren zur Absorption von Chlor in Form von Cl₂ aus Gasströmen, die ausgewählt werden aus Stickstoff, Sauerstoff, Kohlendioxid, Argon, Helium und deren Gemischen, in Wasser, bei dem die Bildung von unterchloriger Säure durch die geregelte Zugabe von Wasserstoffperoxid unterdrückt wird, **dadurch gekennzeichnet, dass** Salzsäure gebildet wird.

2. Verfahren nach Anspruch 1, bei dem Gasströme eingesetzt werden, die neben Chlor höchstens 3 Volumenteile, bezogen auf 100 Volumenteile Chlor an anderen gasförmigen im Wasser absorbierbaren Bestandteilen enthalten.

3. Verfahren nach Anspruch 1 oder 2, bei dem als Chlor enthaltender Gasstrom Luft eingesetzt wird.

4. Verfahren nach Anspruch 1 bis 3, bei dem der Chlor enthaltende Gasstrom nacheinander zwei oder mehr Stufen durchläuft.

5. Verfahren nach Anspruch 1 bis 4, wobei als Vorrichtungen zur Absorption von Chlor Bodenkolonnen, Füllkörperkolonnen, Wäscher oder naßarbeitende Staubabscheider eingesetzt werden.

## Claims

1. Process for absorbing chlorine in the form of Cl₂ from gas streams selected from nitrogen, oxygen, carbon dioxide, argon, helium and mixtures thereof, in water, in which the formation of hypochlorous acid is suppressed by the regulated addition of hydrogen peroxide, **characterized in that** hydrochloric acid is formed.

2. Process according to Claim 1, in which gas streams which comprise, in addition to chlorine, not more than 3 parts by volume, based on 100 parts by volume of chlorine, of other gaseous constituents absorbable in water are used.

3. Process according to Claim 1 or 2, in which the chlorine-containing gas stream used is air.

4. Process according to Claims 1 to 3, in which the chlorine-containing gas stream passes successively through two or more stages.

5. Process according to Claims 1 to 4, wherein the apparatuses used to absorb chlorine are tray columns, columns with random packings, scrubbers or wet-operated dust precipitators.

## Revendications

1. Procédé pour l'absorption de chlore sous forme de Cl₂ à partir de courants de gaz qui sont choisis parmi l'azote, l'oxygène, le dioxyde de carbone, l'argon, l'hélium et des mélanges de ceux-ci, dans de l'eau, dans lequel on supprime la formation d'acide hypochloreux par l'addition réglée de peroxyde d'hydrogène, **caractérisé en ce que** de l'acide chlorhydrique est formé.

2. Procédé selon la revendication 1, dans lequel on utilise des courants de gaz qui, outre du chlore, contiennent au maximum 3 parties en volume, par rapport à 100 parties en volume de chlore, d'autres composants gazeux absorbables dans l'eau.

3. Procédé selon la revendication 1 ou 2, dans lequel on utilise de l'air en tant que courant de gaz contenant du chlore.

4. Procédé selon l'une quelconque des revendications 1 à 3, dans lequel le courant de gaz contenant du chlore traverse successivement deux étages ou plus.

5. Procédé selon l'une quelconque des revendications 1 à 4, dans lequel on utilise comme dispositifs pour l'absorption du chlore des colonnes à plateaux, des colonnes à corps de remplissage, des laveurs ou des collecteurs de poussière fonctionnant par voie humide.
